# EUROPEAN PATENT APPLICATION

(11) **EP 2 837 659 A1**
(43) Date of publication of application: **18.02.2015**
(21) Application number: 13723231.0
(22) Date of filing: 27.03.2013
(51) Int. Cl.: C08L 97/00, B27J 5/00, B27K 7/00, B27N 3/02

(54) **COMPOSITION FOR PRESSED CORKBOARDS, PRESSED CORKBOARD, USE AND PRODUCTION METHOD THEREOF**

(30) Priority: 11.04.2012 PT 12106248
(71) Applicant: Sedacor - Sociedade Exportadora De Artigos de Cortica, Lda., 4536-906 Paços De Brandão (PT)
(72) Inventor: MENDES PINTO DE SÁ, Carlos Alberto, P-4535-334 Paços De Brandão (PT)
(74) Representative: Ferreira, Maria Silvina
(86) International application number: PCT/IB2013/052463
(87) International publication number: WO 2013/153474

(57) **Abstract**

The present invention relates to a composition for pressed corkboards, to a pressed corkboard and to a production method thereof. The invention intends to describe compositions for the manufacture of corkboards capable of monolayer profiling and continuous production.

The composition for pressed corkboards herein presented comprises cork particles and 10-30% latex (w/w). Moreover, a binder may also be used, such as polyurethane resins, phenolic resins, or melamine resins or mixtures thereof. In a more preferred embodiment, the amount of melamine may vary between 5-20% (w/w), more preferably between 10-12%.

The pressed corkboards herein presented may be used as flooring, wall or ceiling coverings.

## Description

### Technical field of the invention

The present invention relates to novel compositions for manufacturing pressed corkboards, to pressed corkboards and to production methods thereof.

### Background of the Invention

For some time efforts have been applied in order to obtain cork coverings due to the several advantages provided thereby: they are silent, reducing impact noise when walking; they are warm; comfortable; and easy to clean.

Currently cork floor coverings are available - with a visual cork or wood appearance; with application by gluing or snap fitting; however, it had not been so far possible to obtain profiled corkboards since the mixtures obtained lacked the required strength and density conditions in order to be subjected to profiling processes. This profiling possibility of the boards leads to an increased stiffness and flexural strength.

The composition for a pressed corkboard, the pressed corkboard and production method thereof surprisingly allows profiling the pressed corkboards, thus allowing their use in profiled coverings without the use of glue. This advantage allows the boards to be interconnected by means of appropriate engaging profiles, preferably by tongue and groove or mechanical snap fitting.

### General description of the invention

The present invention relates to a composition for pressed corkboards, to a pressed corkboard and to a production method thereof. The invention intends to describe compositions for the manufacture of corkboards capable of monolayer profiling and continuous production.

The present invention thus allows the manufacture of floating flooring consisting primarily of cork, without MDF, HDF or another material, using a high-density cork agglomerate sheet on the underside and a decorative cork agglomerate sheet on the upper side.

The present invention relates to a novel composition for pressed corkboards, to a pressed corkboard and to a production method thereof. That is, the invention intends to describe compositions for the manufacture of corkboards capable of monolayer profiling and continuous production.

The present invention thus allows the manufacture of floating flooring consisting primarily of cork, without MDF, HDF or another material, using a high-density cork agglomerate sheet on the underside and a decorative cork agglomerate sheet on the upper side.

In a preferred embodiment, the present invention discloses a composition for a pressed corkboard comprising cork particles and 10-30% latex (w/w).

In a preferred embodiment, the composition for a pressed corkboard comprises an amount of latex preferably ranging between 15-20% latex (w/w), more preferably the latex being synthetic or natural, in a most preferred case the synthetic latex being a butadiene and styrene mixture.

In a preferred embodiment, the composition for a corkboard further comprises at least one binder selected from the following group: polyurethane resins, or phenolic resins, or melamine resins, or mixtures thereof. In a more preferred embodiment, the amount of melamine may range between 5-20% (w/w), still more preferably between 10-12% (w/w).

In a further preferred embodiment of the composition for a corkboard, the particle size of cork particles may range between 0.2 - 2 mm inclusively.

Another embodiment of the present invention discloses a pressed corkboard comprising the compositions for a corkboard; in a preferred embodiment, the board may be a monolayer board thus dismissing any type of finishing.

In one embodiment the pressed corkboard may be profiled, which enables the use thereof in coverings without the need of glue, thus allowing the boards to interconnect by means of engaging profiles of the tongue and groove or mechanical snap fit type. In a further preferred embodiment, the board described in the present invention may further comprise a finishing layer such as a varnish, PVC, LVT, wood, among others. In preferred embodiments, the board may be used as a covering, particularly as flooring, wall or ceiling coverings, even more preferably for a floating flooring.

In another preferred embodiment, a process for the production of a pressed corkboard is also disclosed, comprising the following steps:
a) mixing the particles of granulated cork with 10-30% latex (w/w), more preferably with the addition of melamine. Better results are also obtained when the mixture thus obtained is dried;
b) pouring the resulting mixture in order to obtain a film - or mat of granules;
c) hot pressing - the film /or mat of granules - preferably at a temperature of 140 °C at a pressure of at least 5 kg/cm² for at least 120 seconds until the desired film is obtained;
d) cold pressing - preferably at a temperature 20 °C, at a pressure of at least 8 kg/cm² for at least 120 seconds until a film with desirable thickness is obtained;
e) cutting and profiling the film in order to obtain boards with desired shape and size.

The suitable dimensions of the boards may range between

| | Minimum (mm) | Maximum (mm) |
|---|---|---|
| Length | 300 | 1500 |
| Width | 100 | 500 |
| Thickness | 1.5 | 20 |

In a further preferred embodiment, the production of a pressed corkboard further comprises in step a) a mixture of granulated particles with 10-30% latex (w/w) and also melamine. Still in a further preferred embodiment, melamine is added to the mixture, better results being achieved with the addition of cork particles above 180 kg/m³, which allows increasing the density of the pressed boards without affecting the visual appearance thereof, and so use is made of such cork particles which are usually incinerated.

Corkboards disclosed by or obtained according to the present invention exhibit density values exceeding 600 kg/m³, wherein boards with higher strength and tensile features have densities exceeding 800 kg/m³.

### Description of the Drawings

For an easier understanding of the invention drawings are herein attached, which represent preferred embodiments of the invention which, however, are not intended to limit the scope of the present invention.

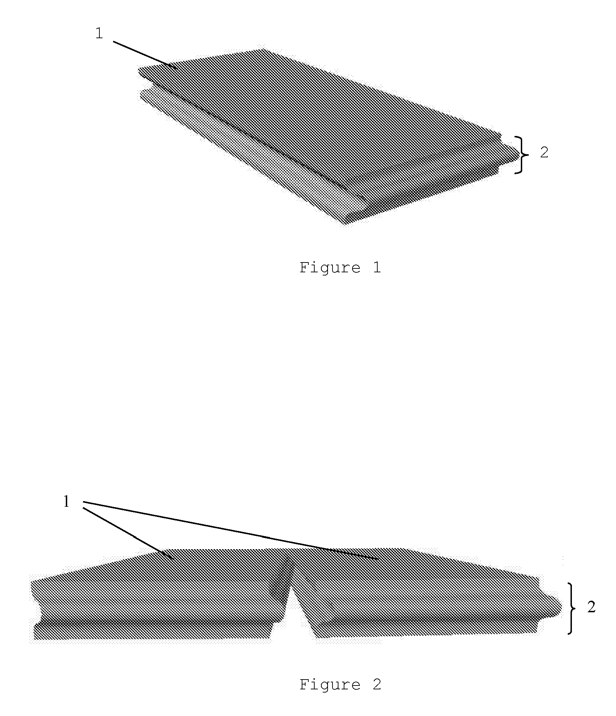

**Figure 1** **-** Schematic view of the cork tile/board: wherein (1) represents the cork agglomerate pressed board; wherein (2) represents the profile of the pressed corkboard.
**Figure 2** **-** Schematic view of an embodiment of a tongue and groove profile.

### Detailed description of the invention

The present invention relates to a novel composition for pressed corkboards, to the pressed corkboard obtained and to the production method thereof and intends to describe compositions for the manufacture of corkboards capable of monolayer profiling and continuous production.

The present invention thus allows the manufacture of floating flooring consisting primarily of cork, without MDF, HDF or another material, using a high-density cork agglomerate sheet on the underside and a decorative cork agglomerate sheet on the upper side.

Gluing the sheets is performed by distributing glue and heat pressing with warm and cold plates. The sheets/boards thus obtained may then be surface treated as a conventional covering agglomerate, being namely sanded and varnished. After cutting into panels of a given size, its edges are milled in order to form the suitable fitting profile (for example, of a tongue and groove or mechanical snap fit type).

The composition for a pressed corkboard, the pressed corkboard thus obtained and the production method thereof surprisingly allow profiling the pressed corkboards, thus allowing their use in coverings without the use of glue. This advantage allows the boards to be interconnected by means of appropriate engaging profiles, preferably by tongue and groove or mechanical snap fit.

### Application Examples

For an easier understanding of the invention preferred embodiments of the invention are hereinafter described, which, however, are not intended to limit the scope of the present invention.

In the development of this pressed corkboard a production process was used comprising the following steps:
a) mixing 100 kg granulated cork having a particle size between 0.2 - 2 mm and a density greater than or equal to 180 kg/m³ with 10 kg synthetic latex;
b) drying the mixture obtained in a rotating drum at a temperature of 70 °C;
c) after drying, mixing 5 kg of melamine glue for about 120 seconds in a blender;
d) discharging/pouring into the press line hopper so as to obtain a film - or a mat of granules - with the thickness required for the formation of the final measurement after pressing;
e) hot pressing the film or mat of granules at a temperature of 140 °C under a pressure of at least 5 kg/cm² for at least 120 seconds - until the boards are obtained;
f) cold pressing - at 20 °C and at least 8 kg/cm² for at least 120 seconds - until pressed boards with an appropriate thickness are obtained;
g) cutting, sanding and profiling the boards obtained into the convenient size and shape.

In order to undertake some of the characterization tests of the mechanical behavior, test samples were used with a pressed corkboard without any kind of fitting. For these cases, the latex composition consists of a butadiene and styrene mixture the latter being present in a percentage higher than 50%. Butadiene is used to replace the synthetic component of natural rubber, while styrene is used to provide hardness. The balance between both elements is essential to provide the board with flexibility and hardness. Table 1 shows some experimental results obtained in mechanical tests.

**Table 1 - Results of mechanical tests with different compositions.**

| Board composition | Density (kg/m³) | Residual Indentation (mm) | Hardness (Shore A) | Tensile strength (kPa) |
|---|---|---|---|---|
| Cork + conventional binder | 460 | 0.90 | 79.5 | 1041 |
| Cork + latex + melamine | >800 | 0.10 | 96.0 | 2120 |
| Cork + latex | 650 | 0.17 | 93.0 | 1760 |

From the results shown in Table 1 one concludes that boards comprising a mixture of cork, latex and melamine show better overall results than those boards comprising only the use of cork with a binder already known in the art. On the other hand, when compared to corkboards and latex there is an increased density, hardness and tensile strength, yet not being a material that is particularly affected when exposed to a fixed weight, thus presenting a lower residual indentation value.

Table 2 presents some experimental results, for which determination samples were used with snap fit system.

**Table 2 - Results of mechanical tests with different compositions.**

| Board composition | Behavior on profiling | Strength and sturdiness of the profile/snap fitting (kPa) |
|---|---|---|
| Cork + conventional binder after profiling | Impossible | --- |
| Cork + latex + melamine after profiling with snap system | Very good | 170 |
| Cork + latex after profiling with snap system | Good | 79 |

Upon examination of Table 2, one concludes that it is possible to profile not only the boards comprising the use of cork and latex, but also those further added with melamine. In both cases, flatness of the test samples is assured after snapping/locking the boards used. In the case of boards comprising only cork and conventional binder the possibility of profiling is not observed.

Thus, it becomes clear that the addition of latex substantially improves the mechanical behavior of corkboards when compared to the use of any binder known in the art. The improved characteristics become even more evident with the addition of melamine.

The present invention is obviously in no way limited to the embodiments herein described and many possibilities for modifications thereof will become apparent to a person with average skill in the art without departing from the general idea of the invention as defined in the claims.

The preferred embodiments described above are obviously possible to be combined with each other. The following claims define further preferred embodiments of the present invention.

## Claims

1. Composition for a pressed corkboard comprising the following elements: cork particles and 10-30% latex (w/w).

2. Composition according to the preceding claim, wherein the amount of latex ranges between 15-20% latex (w/w).

3. Composition according to the preceding claim, wherein the latex used is synthetic latex.

4. Composition according to the preceding claim, wherein the synthetic latex is a butadiene and styrene mixture.

5. Composition according to any one of the preceding claims, wherein it further comprises at least one binder selected from the following group: polyurethane resins, or phenolic resins, or melamine resins, or mixtures thereof.

6. Composition according to any of the preceding claims, wherein the amount of melamine ranges between 5-20% (w/w), preferably 10-12%.

7. Composition according to any of the preceding claims, wherein the particle size of the cork particles ranges between 0.2 to 2 mm inclusively.

8. Pressed corkboard comprising the composition according to the preceding claims.

9. Board according to claim 8, wherein said board is designed as a monolayer board.

10. Board according to any claim 8 or 9, wherein said board is profiled.

11. Board according to any claim 8-10, wherein the profile has a tongue and groove fitting or a mechanical snap fitting.

12. Board according to any claim 8-11, wherein it further comprises a finishing layer such as varnish, PVC, LVT or wood.

13. Use of the board according to claims 8-12 as flooring, wall or ceiling covering.

14. Process for the production of a pressed corkboard according to claims 8-12, comprising the following steps:
a) mixing the cork particles with 10-30% latex (w/w);
b) pouring the resulting mixture in order to obtain a film of granules;
c) hot pressing the film of granules until the boards are obtained;
d) cold pressing until the pressed boards are obtained;
e) cutting and profiling the boards thus obtained into the appropriate shape and size.

15. Process according to the preceding claim, wherein step a comprises the mixture of cork particles with 10-30% latex (w/w) and also melamine.

16. Process according to any claim 14-15 comprising a further step of drying the mixture obtained in step a.

17. Process according to the preceding claim wherein melamine and cork particles having a density above 180 kg/m³ are added after drying.

## Amended claims

### Amended claims under Art. 19.1 PCT

**1.** Composition for a pressed corkboard comprising the following elements: cork particles and 20-25% latex (w/w) of the total weight and at least one binder selected from the following group: polyurethane resins, or phenolic resins, or melamine resins, or mixtures thereof.

**2.** Composition according to the preceding claim, wherein the latex used is synthetic latex.

**3.** Composition according to the preceding claim, wherein the synthetic latex is a butadiene and styrene mixture.

**4.** Composition according to any of the preceding claims, wherein the amount of melamine ranges between 5-20% (w/w), preferably 10-12%.

**5.** Composition according to any of the preceding claims, wherein the particle size of the cork particles ranges between 0.2 to 2 mm inclusively.

**6.** Pressed corkboard comprising the composition according to the preceding claims.

**7.** Board according to claim 6, wherein said board is designed as a monolayer board.

**8.** Board according to any claim 6 or 7, wherein said board is profiled.

**9.** Board according to any claim 6-8, wherein the profile has a tongue and groove fitting or a mechanical snap fitting.

**10.** Board according to any claim 6-9, wherein it further comprises a finishing layer such as varnish, PVC, LVT or wood.

**11.** Use of the board according to claims 6-10 as flooring, wall or ceiling covering.

**12.** Process for the production of a pressed corkboard according to claims 6-10, comprising the following steps:
a) mixing the cork particles with 20-25% latex (w/w);
b) pouring the resulting mixture in order to obtain a film of granules;
c) hot pressing the film of granules until the boards are obtained;
d) cold pressing until the pressed boards are obtained;
e) cutting and profiling the boards thus obtained into the appropriate shape and size.

**13.** Process according to the preceding claim, wherein step a) comprises the mixture of cork particles with 20-25% latex (w/w) and also melamine.

**14.** Process according to any claim 12-13 comprising a further step of drying the mixture obtained in step a.

**15.** Process according to the preceding claim wherein melamine and cork particles having a density above 180 kg/m³ are added after drying.
